# EUROPEAN PATENT APPLICATION

(11) **EP 2 302 410 A1**
(43) Date of publication of application: **30.03.2011**
(21) Application number: 10178643.2
(22) Date of filing: 23.09.2010
(51) Int. Cl.: G01S 13/04, G01S 13/87, G01S 15/04, G01S 15/87, G01S 17/02, G01S 17/87

(54) **System for automatically detecting the presence or absence of objects in a predetermined portion of space to be monitored, for example for detecting free or occupied parking spaces in a car park**

(30) Priority: 24.09.2009 IT MI20091625
(71) Applicant: Agla Elettronica S.R.L., 20042 Albiate (MB) (IT)
(72) Inventor: Silini, Marco, 20050, TRIUGGIO (MB) (IT)
(74) Representative: Ripamonti, Enrico

(57) **Abstract**

The system according to the invention, for automatically detectin free and occupied parking spaces (PA) in a car park, comprises A a plurality of probe wave emitters, and B) at least one receiver (10) arranged to capture the reflected waves, returned by reflection of the probe waves from any objects present in the portion of space to be monitored. Each of the emitters is set up to radiate its probe waves with a direction of maximum intensity that is substantially inclined with respect to the direction of maximum intensity of the probe waves emitted by the other emitters (7B, 7C and 7A). Thanks to at least two and preferably three emitters, the system is able to correctly detect the presence of vehicles even if the emitters form a point source situated laterally with respect to the vehicle and not just on the vertical of its centre.

## Description

### Field of invention

The present invention relates to a system for detecting the presence or absence of objects in a predetermined portion of space to be monitored. In particular, this system can be used for automatically detecting free and occupied spaces in a car park, for example, at a supermarket, multi-storey car park or airport.

### State of the art

Systems are currently known of for the automatic detection of free and occupied spaces in a car park or garage. The aim of these systems is to help car park users in finding a free parking space, for example, in a car park of a supermarket, an airport or in a multi-storey car park.

One of these known systems comprises a plurality of units able to emit ultrasounds and receive the echoes. Each emitter/receiver unit is set up to be positioned roughly on the vertical of the centre of each parking space. Each parking space has associated traffic lights or other signal lights that are, for example, green if the parking space is free, according to the associated emitter/receiver unit, and red if the parking space is occupied.

This known system must be installed and adjusted when the parking spaces are empty: in fact, each sensor must be adjusted so that it can detect the floor below as such, rather than as the roof of a car. Lost profits due to the period of closure for installation can easily arrive to several tens of thousands of euro, especially in high turnover car parks that do not have slack periods during the year. In addition, in current systems, each emitter/receiver unit must be positioned approximately on the vertical of the centre of the parking space, whilst the traffic lights or another signal light, for being easily seen by the users, must be positioned at the end or, even better, outside the parking space, for example, at the centre of the access lane. For each parking space, it is therefore necessary to install two separate components, the emitter/receiver unit and a visual indicator, which must then be connected with special power supply and signal cabling.

One object of the present invention is to provide a system for the automatic detection of free and occupied spaces in a car park that is an improvement over known systems with regards to the previously stated drawbacks.

### Summary of invention

This objective is achieved by the present invention, with a system for detecting the presence or absence of objects in a predetermined portion of space and possessing characteristics in accordance with claim 1.
The advantages that can be obtained with the present invention shall become clearer, to an expert in the field, from the following detailed description of a particular, non-limitative embodiment, explained with reference to the following schematic figures.

### List of Figures

Figure 1 shows a perspective view of an emitter/receiver unit of a particular embodiment of a system according to the invention,
Figure 2 shows a side view of the emitter/receiver unit in Figure 1,
Figure 3 shows a plan view of a portion of a car park for motor vehicles in which a plurality of the emitter/receiver units in Figure 1 are installed, activated according to a first method of operation,
Figure 4 shows a side view of a parking space of the portion of car park in Figure 3,
Figure 5 shows graphs against time of the probe waves emitted by and the reflected waves received by the emitter/receiver unit in Figure 1, and
Figure 6 shows a plan view of the portion of the car park in Figure 3, where the emitter/receiver units are activated according to a second method of operation.

### Detailed description

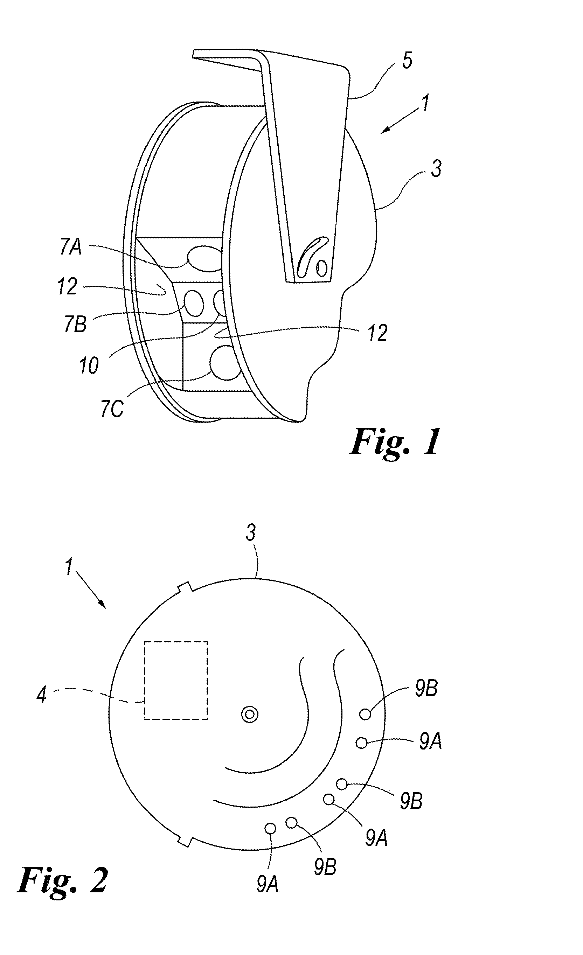

The attached figures regard a system for the automatic detection of parking spaces according to a particular embodiment of the present invention.
This system comprises one or more emitter/receiver units, each of which is indicated as a whole by reference numeral 1 (Figure 1). In this embodiment, each emitter/receiver unit 1 comprises an outer box 3 that encloses and protects the unit's various circuits and electrical or electronic components. A bracket 5 is fixed to the outer box 3 by which the unit 1 can be mounted on a ceiling, wall, or other parts of the building or other construction in which the system must be installed.

According to one aspect of the invention, each emitter/receiver unit 1 is provided with at least two, and preferably at least three, emitters of ultrasound 7A, 7B and 7C or other opportune probe waves. Each of these emitters 7A, 7B and 7C can be, for example, a ceramic transducer of the 400ST160 type produced by Midas Components Ltd (United Kingdom) or by Pro-Wave Electronics Corporation (Taiwan), with a beam emission angle of 55° at -65dB.

For each emitter/receiver unit 1, the detection system also comprises a receiver of ultrasounds 10 or other opportune reflected waves OR, where the term "reflected waves" in the present description indicates the waves returned by reflection of the probe waves from objects struck by the latter.
This receiver 10 can be, for example, a ceramic transducer of the 400ST120 type produced by Midas Components Ltd (United Kingdom) or by Pro-Wave Electronics Corporation (Taiwan), with a reception angle of 85° at -67dB.

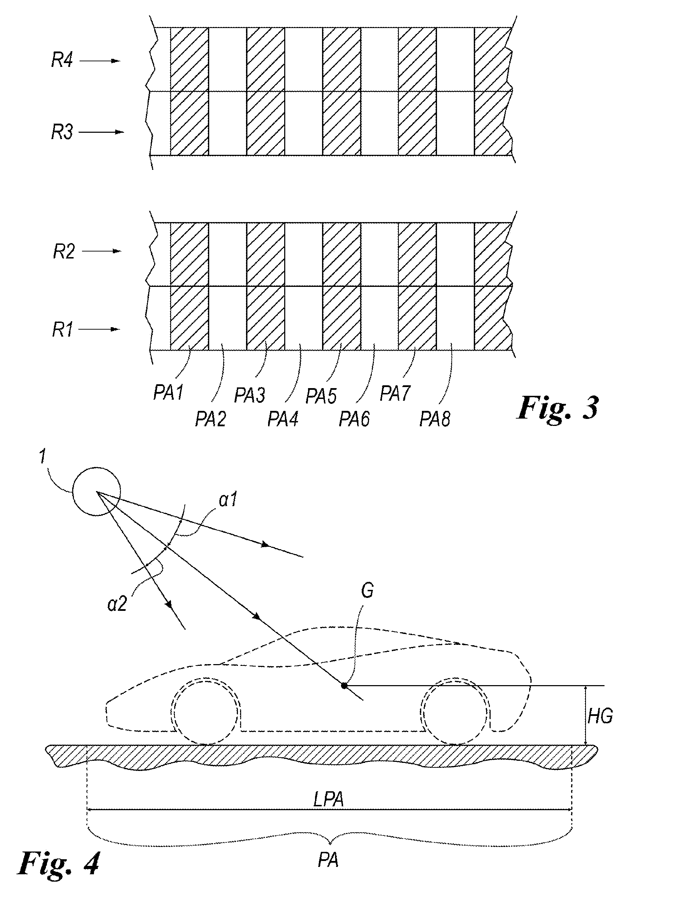

The receiver 10 is advantageously mounted on the unit 1: this simplifies and significantly speeds up installation of the detection system as a whole.
In the case of a covered car park, each unit 1 can be preferably mounted on the ceiling above one end of the associated parking space, preferably at the centre of the end side or close to this centre (Figures 3 and 4).

Preferably, the three or more emitters 7A-7C are all arranged on a same emitter/receiver unit 1 and the latter and the set of emitters 7A-7C in particular have overall dimensions substantially smaller than those of the parking space or other portion of space to be monitored, such that they can be considered substantially a point source of probe waves. For example, the outer box 3 of the unit 1 has, as maximum dimensions, a diameter of approximately 150 mm and a thickness of approximately 60 mm.
More generally in the present description, with respect to a usual parking space in a car park, a body with maximum dimensions not exceeding half a metre can be considered a point target, and all the more so if it has maximum dimensions not exceeding approximately 0.2 metres.

Preferably, the emitters 7A-7C are arranged on the unit 1 so that the directions of maximum intensity of the respective emissions are mutually inclined with respect to each other. For example, in the embodiment in Figure 4, where the emitter/receiver unit 1 is set up for being installed at heights of between two and three metres in car parks, the directions of maximum intensity of the three emitters 7A-7C are staggered between each other with angles of α1 and α2, preferably between 10° and 30°, e.g. with α1 = α2 = 20°.

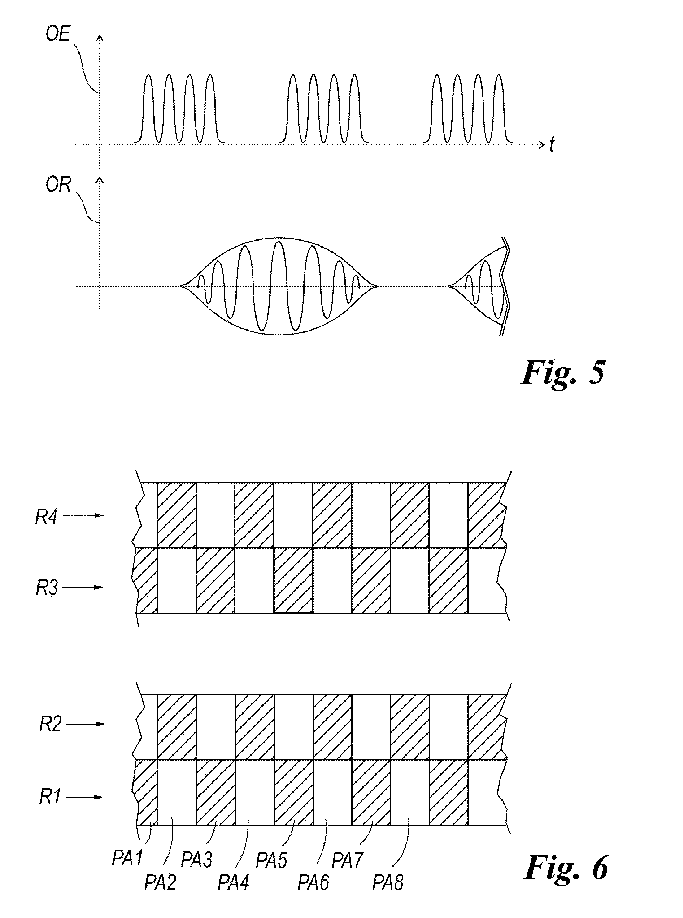

Preferably, the probe waves OE emitted by each emitter 7A-7C are sinusoidal trains or packets; in alternative, they could also be square-wave trains, pulse trains, other types of wave train, or even single impulses or wave packets (Figure 5).
The sinusoids of the aforesaid packets preferably have a frequency of 40 kHz, so as to have a resolution of approximately 4 mm in detecting the position of objects; clearly however, other embodiments could use ultrasounds with fundamentally different frequencies, preferably equal to or above 25 kHz and more preferably equal to or below 100 kHz.

The operation of the automatic parking space detection system just described is as follows.
Periodically, each emitter/receiver unit 1 emits the so-called sinusoidal packet trains (wave OE in Figure 5) towards the respective parking space PA1, PA2... to be monitored; each emitter/receiver unit 1 could emit, for example, a single wave train of 20 impulses on each emission.
The three emitters advantageously perform the following emission cycle, which comprises the following emission combinations:
a) initially (emission combination 1) just emitter 7A is activated, emitting a single wave train for example, while the other two emitters 7B and 7C remain inactive and the receiver 10 acquires the reflected ultrasounds;
b) after this, emitters 7B and 7C (emission combinations 2 and 3) are activated one at a time in a similar manner;
c) then the emitters are simultaneously activated two at a time; for example, at first emitters 7A and 7B simultaneously perform the operations in point a), while emitter 7C is inactive and the receiver 10 acquires the reflected ultrasounds (emission combination 4), after which the operations in point a) are simultaneously performed by just emitters 7A and 7C (emission combination 5) and, lastly, they are simultaneously performed by just emitters 7B and 7C (emission combination 6);
d) finally, all three emitters 7A, 7B and 7C simultaneously perform the operations in point a) and the receiver 10 acquires the reflected ultrasounds (emission combination 7).

Following each of the preceding emission combinations 1-7, the receiver 10 will detect the reflected wave packet trains OR resulting from the reflection of the probe waves on the different portions of the surrounding objects (Figure 5).

Preferably, for example by means of an opportune logic unit 4 housed inside each unit 1, each return sound emission detected by the receiver 10 is filtered so as to let only a band of frequencies centred on the same frequency of the probe waves OE (namely 40 kHz in the present embodiment) and of opportune amplitude (e.g. 2 kHz in the present embodiment) pass through, facilitating the identification of the reflected waves. The reflected waves OR are formed by a plurality (theoretically an infinity) of components that have a delay with respect to the probe wave OE, the greater the distance at which the surface portion that generated the component of the wave OR by reflection is located, the greater being this delay. Therefore, the emitter/receiver unit 1 advantageously considers only the components of the reflected wave OR within a predetermined delay range, i.e. the logic unit 4 opens a "listening window" with an opportune delay and an opportune duration. Preferably, the limits of this delay range correspond to the distances of the closest border and that furthest away of the parking space to be monitored, e.g. 0.7 metres and 5.7 metres respectively, if the parking spaces to be detected have a length LPA of five metres (Figure 4).

At this point, the logic unit 4 checks if the energy or power of the reflected waves generated by any of the seven above-stated emission combinations 1-7 is greater than a set threshold.
Should that be the case, the logic unit 4 recognizes the monitored parking space as being occupied.

The use of multiple emitters 7A-7C instead of just one, particularly if grouped on a unit 1 of very small dimensions with respect to the parking space or other area to be monitored, such as to be substantially similar to a point source, and particularly if arranged in a way that the directions of maximum intensity of the respective emissions are substantially inclined between each other, enable the presence or absence of an object in the parking space, or other area to be monitored, to be detected with greater accuracy. In particular, it provides acceptable detection accuracy even if the emitter/receiver unit 1 is not positioned on the vertical of the centre of the car, but is positioned at the side or eccentrically with respect to it, for example, close to one end of the parking space or, at the limit, even outside the latter. Two advantages deriving from the possibility of positioning the emitter/receiver units 1 close to one end of the parking space or, at the limit, even outside the parking space, are as follows:
- the emitter/receiver units 1 can be installed and adjusted without emptying the car park, avoiding considerable financial losses.
- the emitter/receiver units 1 can mount on board, or in any case be positioned very close to, the visual indicators that indicate to car park users whether the monitored space is free or occupied.

These visual indicators can be, for example, LEDs, such as those shown in Figure 2 and indicated by reference numerals 9A and 9B, or other types of lights or luminous indicators. Preferably, but not necessarily, the LEDs 9A and 9B or other types of luminous indicators are mounted on the same outer box 3 that contains the probe wave emitters 7A-7C and at least one receiver 10. In this way there is a significant reduction in installation costs for the system, because only one item is installed (namely the unit 1) for each parking space instead of a detector/emitter unit plus a separate visual indicator, and the laying of connection cables between the indicators and the emitter/receiver unit is avoided.

The adoption of two emitters 7A and 7B enables the presence or absence of vehicles in the parking space to be detected with greater accuracy and less errors with respect to known systems that use just one emitter per parking space.

However, in certain cases (for example, if a car is parked with the rear facing the emitter/receiver unit 1 and this rear has a particular shape, for example, very rounded or receding, or in the case of cars with very aerodynamic and flat fronts parked front on), just two emitters might not detect the presence of the vehicle because the profile of the bodywork excessively deviates the reflected waves from the receiver 10. It has been verified that the adoption of three emitters 7A-7C instead of two practically eliminates, or in any case considerable reduces, this type of error, taking such errors to a sufficiently negligible level for practical uses.

The activation of the emitters 7A-7C individually, in couples and all three together also contributes to reduce detection errors. It has in fact been noted that in the majority of cases, the simultaneous emissions of multiple emitters give rise to a return sound emission having greater energy than the emissions of a single emitter 7A-7C; this explains the usefulness of activating multiple emitters 7A-7C at the same time. However, since in some cases the simultaneous emissions from multiple emitters could be subtractive instead of additive, due to phase opposition phenomena for example, giving rise to a return sound emission having less energy and/or power than the emissions on a single emitter 7A-7C, it is useful to also activate the emitters 7A-7C one at a time.

To reduce false detections by the system, the above-described emission cycle is advantageously repeated a certain number N of times, for example three of four times, i.e. the sequence of emission combinations 1-7 is repeated, for example, N = three or four times. Alternatively, each emission combination is repeated a certain number N of times, for example three or four times, before carrying out the next emission combination. At this point, the logic unit 4 checks if the energy or power threshold of the reflected waves is exceeded in at least two different emission cycles for a particular emission combination 1-7; for example, the logic unit 4 checks if in at least two emission cycles of the emission combination 4 (i.e. when emitters 7A and 7B simultaneously emit while emitter 7C is inactive), the energy or power of the reflected waves is maximum, or in any case greater than the minimum threshold:
should that be the case, the logic unit 4 recognises the monitored parking space as occupied. In this way, false readings due to transitory events, such as a moving car or person passing in front of the active emitters for example, or the wind or random noises are eliminated or, in any case, reduced considerably.

To further reduce false detections by the system, the central emitter 7B is advantageously pointed towards an ideal point G situated on the vertical of the centre of the parking space, at a height of approximately one metre above ground (Figure 4).

Each unit 1 is advantageously provided with side shields 12 (Figure 1) that limit the angle of propagation of emissions from the emitters 7A-7C broadways on the parking spaces. In this way, the probability that a unit 1 erroneously receives echoes returning from vehicles or other objects not in the parking space that the unit 1 must monitor, but in adjacent parking spaces, is reduced.

To further reduce detection errors caused by the reception, on each unit 1, of echoes returning from cars or other objects located in parking spaces next to that controlled by the unit 1 considered, the various units 1 are advantageously synchronized to simultaneously emit in groups.

A first possible synchronization scheme is shown in Figure 3. According to this scheme, in a first stage, the units 1 associated with the even parking spaces (PA2, PA4, PA6...) of each row R1, R2, R3, Ra... are simultaneously activated in emission, while the other units 1 do not emit.
In a second stage, the units 1 associated with the odd parking spaces (PA1, PA3, PA5...) of each row R1, R2, R3, R4... (both odd and even rows) are simultaneously activated in emission.

A second possible synchronization scheme, with a chequer-board pattern, is shown in Figure 6. According to this scheme, in a first stage, the units 1 associated with the even parking spaces (PA2, PA4, PA6...), of just the even rows R2, R4, R6... for example, are simultaneously activated in emission, while the other units 1 do not emit. In a second stage, the units 1 associated with the odd parking spaces (PA1, PA3, PA5...), of only the odd rows R1, R3, R5... for example, are simultaneously activated in emission.

The previously described embodiments are susceptible to various modifications and variations without however departing from the scope of protection of the present invention. For example, a detection system according to the invention could be used for detecting free or occupied spaces in ports, wharfs or other structures different from car parks. Not just ultrasounds or sound waves can be used as probe waves and reflected waves, but also other types of wave, for example, electromagnetic waves, light rays and, in particular, infrared rays; in the last case, the probe wave emitters are clearly infrared ray emitters.

The examples and lists of possible variants of the present application should be intended as not exhaustive.

## Claims

1. A system for automatically detecting the presence or absence of objects in a predetermined portion of space to be monitored (PA1, PA2, and PA3), comprising:
- a plurality of probe wave emitters (7A, 7B and 7C), and
- at least one receiver (10) set up to detect the reflected waves, returned by reflection of the probe waves from any objects present in the portion of space to be monitored, and
- where each of the emitters (7A, 7B and 7C) is arranged for radiating its probe waves with a direction of maximum intensity substantially inclined with respect to the direction of maximum intensity of the probe waves emitted by the other emitters (7B, 7C and 7A).

2. A system according to claim 1, where the probe waves and the reflected waves are sound waves and/or electromagnetic waves, for example:
- ultrasounds having, for example, a fundamental frequency substantially in the range between 25 kHz and 10⁴ MHz and, if necessary, in the range between 25 and 100 kHz.
- infrared rays.

3. A system according to claim 1, comprising at least three probe wave emitters (7A, 7B and 7C).

4. A system according to claim 1, comprising at least one emitter/receiver unit (1) on board of which the following are mounted:
- the plurality of probe wave emitters (7A, 7B and 7C), and
- the at least one receiver (10), and
where the at least one emitter/receiver unit (1) is set up to substantially constitute a point source of probe waves, or in any case having negligible dimensions with respect to the portion of space to be monitored (PA1, PA2 and PA3), from which the probe waves are radiated with the said inclinations of the directions of maximum intensity.

5. A system according to claim 1, where each of the emitters (7A, 7B and 7C) is set up to radiate its probe waves such that the respective directions of maximum intensity have an inclination (α1 and α2) between 0° and 45°, and preferably between 10° and 30°, with respect to the direction of maximum intensity of the probe waves emitted by the other emitters (7B, 7C and 7A).

6. A system according to claim 1, programmed or in any case set up to activate an emission cycle comprising, optionally not in this order, the following operations:
- carrying out a first set of emission combinations, where in each emission combination, each emitter (7A, 7B and 7C) of at least one and the same emitter/receiver unit (1) is activated individually, whilst the remaining emitters are inactive,
- carrying out a second set of emission combinations, where in each emission combination, at least two of the emitters (7A, 7B and 7C) of at least one and the same emitter/receiver unit (1) are activated simultaneously, whilst any remaining emitters (7A, 7B and 7C) are inactive, and
- detecting the reflected waves generated by each emission combination with at least one receiver (10) of the at least one and the same emitter/receiver unit (1).

7. A system according to claim 6, where the emission cycle includes the operation of carrying out a plurality of emission combinations in succession, activating all the possible subsets (7A + 7B, 7A + 7C, 7B + 7C and 7A + 7B + 7C) of the plurality of emitters (7A, 7B and 7C) of the at least one and the same emitter/receiver unit (1), where in each emission combination all the emitters (7A, 7B and 7C) of a predetermined subset (7A + 7B, 7A + 7C, 7B + 7C and 7A + 7B + 7C) are activated simultaneously.

8. A system according to claim 6, where the emission cycle includes the operation of carrying out an emission combination wherein all the emitters (7A, 7B and 7C) of at least one and the same emitter/receiver unit (1) are activated simultaneously.

9. A system according to claim 1, where each of the emitters (7A, 7B and 7C) is set up to emit wave packet trains, where the wave packets can be, for example, square waves or portions of sinusoidal waves.

10. A system according to claim 6, comprising a logic unit (4) programmed or in any case set up to check if the energy and/or power of an opportune portion of the reflected waves generated from a same emission combination is substantially less than, equal to or greater than a predetermined energy and/or power threshold.

11. A system according to claim 10, where the logic unit (4) is programmed or in any case set up to perform the following operations:
- identifying the portion of space to be monitored as free or empty, if the energy and/or power of an opportune portion of the reflected waves generated from a same emission combination is substantially lower than the predetermined energy and/or power threshold, and
- identifying the portion of space to be monitored as occupied or full, if the energy and/or power of an opportune portion of the reflected waves generated from a same emission combination is substantially greater than the predetermined energy and/or power threshold.

12. A system according to claim 10, where the logic unit (4) is programmed or in any case set up to check if the energy and/or power of an opportune portion of the reflected waves generated by a predetermined emission combination is substantially greater than, equal to or less than the predetermined energy and/or power threshold:
- in a plurality of emission cycles, and/or
- in a plurality of repetitions of the same emission combination.

13. A system according to claim 4, where the at least one emitter/receiver unit (1) comprises at least one indicator (9A and 9B) set up to signal to users of the system the presence or absence of objects in the predetermined portion of space to be monitored, where the indicator (9A and 9B) can comprise, for example, one or more of following devices:
- one or more signalling lamps,
- one or more indicator lights,
- one or more sets of traffic lights,
- one or more light emitting diodes,
- one or more light bulbs,
- one or more voice or, in any case, acoustic indicators, and
- one or more screens and/or indicator boards.

14. A system according to claim 13 where, in alternative or in combination:
a) the emitter/receiver unit (1) comprises an outer box (3) to which the at least one indicator (9A and 9B) is fixed and/or that at least partially contains this indicator,
b) the emitter/receiver unit (1) comprises an outer box (3) that houses and protects at least part of the at least one indicator (9A and 9B), and
c) the emitter/receiver unit (1) comprises an outer box (3) located at a distance substantially equal to or less than one metre from the at least one indicator (9A and 9B), and more preferably substantially equal to or less than 0.4 metres from the at least one indicator (9A and 9B).
